# EUROPEAN PATENT APPLICATION

(11) **EP 4 636 838 A1**
(43) Date of publication of application: **22.10.2025**
(21) Application number: 25164806.9
(22) Date of filing: 19.03.2025
(51) Int. Cl.: H01M 4/131, H01M 4/36, H01M 4/525, H01M 10/052, C01G 53/50, H01M 10/44, H01M 4/1315, H01M 4/02

(54) **POSITIVE ELECTRODES AND RECHARGEABLE LITHIUM BATTERIES**

(30) Priority: 20.03.2024 KR 20240038685
(71) Applicant: SAMSUNG SDI CO., LTD., Yongin-si, Gyeonggi-do 17084 (KR)
(72) Inventor: KIM, Young-Ki, 17084 Yongin-si (KR); KONG, Youngsun, 17084 Yongin-si (KR); CHOO, Sung Ho, 17084 Yongin-si (KR); KANG, Seok Mun, 17084 Yongin-si (KR); KANG, Byungwuk, 17084 Yongin-si (KR); YOON, Jaesang, 17084 Yongin-si (KR); JUN, Dowook, 17084 Yongin-si (KR); JEONG, Jaeyong, 17084 Yongin-si (KR); DOO, Sungwook, 17084 Yongin-si (KR); KANG, Gwiwoon, 17084 Yongin-si (KR); LEE, Soonrewl, 17084 Yongin-si (KR)
(74) Representative: Marks & Clerk LLP

(57) **Abstract**

A positive electrode and a rechargeable lithium battery including the same are provided. The positive electrode comprises a positive electrode current collector, and a positive electrode active material layer on the positive electrode current collector, wherein the positive electrode active material layer comprises a positive electrode active material. The positive electrode active material includes core particles including a layered lithium nickel-manganese-based composite oxide including about 0.1 mol% to about 2 mol% of cobalt based on 100 mol% of a total metal content in the lithium nickel-manganese-based composite oxide, excluding lithium, and an aluminium coating layer on the surface of the core particles, wherein, in a dQ/dV graph of voltage during standard charging and discharging, evaluated under a constant current of 0.2C, an applied current of 0.5 mA to 0.7 mA, and where 1 C = 200 mAh/g, a point where a tangent line drawn at a first inflection point meets the line where dQ/dV = 0 is in a voltage range of about 3.68 V to about 3.70 V.

## Description

### BACKGROUND

### 1. Field

Embodiments of the present disclosure relate to positive electrodes and rechargeable lithium batteries including the positive electrodes.

### 2. Description of the Related Art

Portable information devices (such as cell phones, laptops, smart phones, *etc*.) and/or electric vehicles may use rechargeable lithium batteries having relatively high energy densities and easy portability as driving power sources. Additionally, research and development have focused on utilizing these rechargeable lithium batteries with high energy densities as driving power sources for hybrid or electric vehicles and/or as power storage power sources for electric energy storage systems and/or power walls.

To provide rechargeable lithium batteries for these applications, various positive electrode active materials have been investigated. Among them, lithium nickel-based oxide, lithium nickel manganese cobalt composite oxide, lithium nickel cobalt aluminium composite oxide, and lithium cobalt oxide have been used as positive electrode active materials. However, with the increasing demand for large-sized, high-capacity, or high-energy-density rechargeable lithium batteries, the supply of positive electrode active materials such as cobalt, a rare metal, is expected to be severely limited. Because cobalt is expensive and there are not many remaining reserves, it is desirable to develop positive electrode active materials that exclude cobalt or, at least, reduce (substantially reduce) its content (e.g., amount).

The above information disclosed in this Background section is only for enhancement of understanding of the background of the disclosure and therefore it may contain information that does not constitute prior art.

### SUMMARY

Aspects of one or more embodiments of the present disclosure relate to a positive electrode comprising a positive electrode active material including a layered lithium nickel-manganese-based composite oxide, which increases energy density, improves performance at high temperatures and high voltages, and improves capacity characteristics, initial charge/discharge efficiency, and high-temperature life-cycle characteristics.

Additional aspects will be set forth in part in the description which follows and, in part, will be apparent from the description, or may be learned by practice of the presented embodiments of the disclosure.

In one or more embodiments of the present disclosure, a positive electrode comprises a positive electrode current collector, and a positive electrode active material layer on the positive electrode current collector, wherein the positive electrode active material layer comprises a positive electrode active material. The positive electrode active material includes core particles including a layered lithium nickel-manganese-based composite oxide including about 0.1 mol% to about 2 mol% of cobalt based on 100 mol% of a total metal content (in the layered lithium nickel-manganese-based composite oxide) excluding lithium, and an aluminium coating layer located on the surface of the core particles, wherein in a dQ/dV (differential capacity (dQ) versus differential voltage(dV)) graph of voltage after a formation process, evaluated under a constant current of 0.2 C, an applied current of 0.5 mA to 0.7 mA, and where 1 C = 200 mAh/g, a point where a tangent line drawn at a first inflection point meets the line where dQ/dV = 0 is in a voltage range of about 3.68 V to about 3.70 V. In other words, a positive electrode active material includes core particles made of a layered lithium nickel-manganese-based composite oxide, containing about 0.1 mol% to about 2 mol% of cobalt based on 100 mol% of the total metal content, excluding lithium. These core particles are coated with an aluminium layer. In a dQ/dV graph of voltage after the formation process, evaluated under a constant current of 0.2 C, an applied current of 0.5 mA to 0.7 mA, and where 1 C corresponds to 200 mAh/g, a point where a tangent line drawn at the first inflection point meets the line where dQ/dV = 0 appears in the voltage range of about 3.68 V to about 3.70 V.

In one or more embodiments of the present disclosure, a rechargeable lithium battery includes the aforementioned positive electrode, a negative electrode, and an electrolyte.

At least some of the above and other features of the invention are set out in the claims.

The positive electrode active material according to one or more embodiments maximizes capacity and energy density while minimizing or reducing production costs, ensures long life-cycle characteristics, and improves high-voltage and high-temperature characteristics. A rechargeable lithium battery using the positive electrode active material can exhibit high initial charge/discharge capacity and efficiency, and can realize excellent or suitable high-temperature life-cycle characteristics and high-temperature storage characteristics.

### BRIEF DESCRIPTION OF THE DRAWINGS

The accompanying drawings are included to provide a further understanding of the present disclosure, and are incorporated in and constitute a part of this specification. The drawings illustrate example embodiments of the present disclosure and, together with the description, serve to explain principles of present disclosure. In the drawings:
FIG. 1 is a perspective view schematically showing a rechargeable lithium battery according to one or more embodiments of the present disclosure.
FIG. 2 is a cross-sectional view schematically showing a rechargeable lithium battery according to one or more embodiments of the present disclosure.
FIG. 3 is a perspective view schematically showing a rechargeable lithium battery according to one or more embodiments of the present disclosure.
FIG. 4 is a perspective view schematically showing a rechargeable lithium battery according to one or more embodiments of the present disclosure.
FIG. 5 is a dQ/dV (differential capacity (dQ) versus differential voltage (dV)) graph for the half-cell of Example 1 during formation and standard charging and discharging after formation.
FIG. 6 is a dQ/dV graph for the half-cell of Comparative Example 1 during formation and standard charging and discharging after formation.
FIG. 7 shows dQ/dV graphs for the half-cells of Example 2 and Comparative Example 2 during formation.
FIG. 8 is a dQ/dV graph during standard charging and discharging after formation for the half-cells of Example 2 and Comparative Example 2.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise.

As used herein, "combination thereof" refers to a mixture, a laminate, a composite, a copolymer, an alloy, a blend, a reaction product, and/or the like of the constituents.

It will be further understood that the terms "comprises," "comprising," "includes," "including," "have," "having," "contain," and "containing," when used in this specification, specify the presence of the stated features, integers, steps, operations, elements, and/or components, but do not preclude the presence or addition of one or more other features, integers, steps, operations, elements, components, and/or groups thereof.

In the drawings, the thickness of layers, films, panels, regions, and/or the like, may be exaggerated for clarity. Unless otherwise noted, like reference numerals denote like elements throughout the attached drawings and the written description, and thus, duplicative descriptions thereof may not be provided.

It will be understood that when an element, such as an area, layer, film, region or portion, is referred to as being "on" another element, it can be directly on the other element, or one or more intervening elements may be present. In contrast, when an element or layer is referred to as being "directly on" or "immediately adjacent to" another element or layer, there are no intervening elements or layers present. In addition, it will also be understood that when an element is referred to as being "between" two elements, it can be the only element between the two elements, or one or more intervening elements may also be present.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

In addition, "layer" herein includes not only a shape formed on the whole surface when viewed in a plan view, but also a shape formed on a partial surface (i.e., part of the surface).

As used herein, "/" may be interpreted as "and," or as "or" depending on the context.

In the present disclosure, when particles are spherical, "diameter" indicates a particle diameter or an average particle diameter, and when the particles are nonspherical, the "diameter" indicates a major axis length or an average major axis length. The average particle diameter may be measured by a method generally utilized and/or generally available to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may refer to the diameter (D50). D50 refers to the average diameter (or size) of particles whose cumulative volume corresponds to 50 vol% in the particle size distribution (*e.g*., cumulative distribution), and refers to the value of the particle size corresponding to 50% from the smallest particle when the total number of particles is 100% in the distribution curve accumulated in the order of the smallest particle size to the largest particle size. As used herein, when a definition is not otherwise provided, the average particle diameter refers to a diameter (D50) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and/or the like. As used herein, the term "and/or" includes any and all combinations of one or more of the associated listed items.

Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the terms "use," "using," and "used" may be considered synonymous with the terms "utilize," "utilizing," and "utilized," respectively.

"Metal" is interpreted as a concept including ordinary metals, transition metals and metalloids (semi-metals).

### Positive Electrode

In one or more embodiments, a positive electrode comprises a positive electrode current collector, and a positive electrode active material layer on the positive electrode current collector, wherein the positive electrode active material layer comprises a positive electrode active material. The positive electrode active material includes core particles including a layered lithium nickel-manganese-based composite oxide including about 0.1 mol% to about 2 mol% of cobalt based on 100 mol% of the total metals (metal content) in the layered lithium nickel-manganese-based composite oxide excluding lithium, and an aluminium coating layer located on the surface of the core particles. The positive electrode active material has a point where a tangent line drawn at the first inflection point meets the line where dQ/dV = 0 in a voltage range of about 3.68 V to about 3.70 V in a dQ/dV graph according to voltage after formation, evaluated under the conditions of 1 C=200 mAh/g, a constant current of 0.2 C, and applied current of 0.5 mA to 0.7 mA. The positive electrode that satisfies these characteristics may achieve excellent or suitable capacity, efficiency, and life-cycle characteristics while reducing production costs, may secure maximized or increased energy density, and may improve performance under high-temperature and high-voltage conditions. In other words, in some embodiments, a positive electrode active material includes or is composed of core particles made of a layered lithium nickel-manganese-based composite oxide with about 0.1 mol% to 2 mol% cobalt, excluding lithium, and an aluminium coating layer on the surface of the core particles. This material shows a specific point in a dQ/dV graph, where a tangent line at the first inflection point meets the dQ/dV = 0 line, within a voltage range of about 3.68 V to 3.70 V, under the conditions of 1 C = 200 mAh/g, a constant current of 0.2 C, and an applied current of 0.5 mA to 0.7 mA. This positive electrode active material can achieve excellent capacity, efficiency, and life-cycle characteristics, reduce production costs, maximize energy density, and improve performance under high-temperature and high-voltage conditions.

The "formation" (e.g., the formation process) may be a first charge/discharge process after manufacturing the battery. The "standard charging and discharging" (e.g., after formation, or after the formation process) may be a standard charge/discharge cycle that occurs after the formation process, and may refer to, for example, a second or more charge/discharge cycle. The dQ/dV graph according to voltage can be expressed as a dQ/dV graph according to charge/discharge voltage, or simply as a dQ/dV graph. Also, "during formation" may refer to the initial (first) charge/discharge cycle after manufacturing a battery, the battery undergoes critical electrochemical changes that set the stage for its future performance.

In one or more embodiments, the dQ/dV graph may be a graph obtained by charging and discharging a half-cell including a structure in which a positive electrode including the positive electrode active material, a polymer separator, and a lithium metal counter electrode are sequentially stacked, and including an electrolyte solution including a carbonate-based solvent and a lithium salt. The first inflection point may refer to the point where the slope of the contact point in the dQ/dV graph increases and then decreases, and in the S-curve shape it may be correspond to a middle point of the S-curve. For example, the first inflection point may refer to the point where the slope of the tangent line of the S-curve increases and then decreases.

As an example, the dQ/dV graph according to the voltage after formation may have a slope of less than or equal to about 0.02, for example, less than or equal to about 0.015, or less than or equal to about 0.01 in the range of 3.60 V to 3.68 V. The positive electrode active material that satisfies these characteristics have high capacity and energy density, and have excellent or suitable performance such as life-cycle characteristics at high temperature and high voltage.

In the positive electrode active material according to one or more embodiments, in the dQ/dV graph according to the voltage during formation, the point where a tangent line drawn at the first inflection point meets the line where dQ/dV = 0 may appear in the voltage range of about 3.68 V to about 3.72 V, for example about 3.68 V to about 3.70 V.

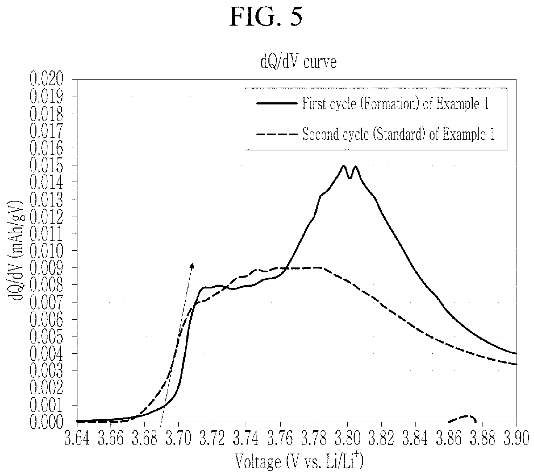

In the dQ/dV graph according to the voltage after the formation (*e.g*., during the second cycle, *e.g.,* the second charge/discharge cycle), a point where a tangent line drawn at the first inflection point meets the line where dQ/dV = 0 may appear at a lower voltage value than, in a dQ/dV graph according to voltage during formation (*e.g.*, during a first cycle, *e.g.,* a first charge/discharge cycle), a point where a tangent line drawn at the first inflection point meets the line where dQ/dV = 0 (*see, e.g.,* FIG. 5). In other words, compared to the dQ/dV graph during formation, the dQ/dV graph during standard charging and discharging may be shifted to the left.

In one or more embodiments, the dQ/dV graph during formation may show two main peaks, and the dQ/dV graph during standard charging and discharging after formation may show one main peak (*see, e.g.*, FIG. 5).

In other words, the "formation" phase refers to the initial charge/discharge cycle immediately after a battery is manufactured, during which critical electrochemical changes occur, setting the stage for the battery's future performance. In contrast, "after formation" refers to the standard charge/discharge cycles that follow, starting from the second cycle. The dQ/dV graph, which plots charge/discharge voltage, differs between these phases. During formation, the graph may show two main peaks and specific voltage characteristics, while after formation, it typically shows one main peak and a shift to lower voltage values. This distinction highlights the different electrochemical behaviors and performance characteristics during and after the formation phase.

The positive electrode active material according to one or more embodiments includes core particles including a layered lithium nickel-manganese-based composite oxide including about 0.1 mol% to about 2 mol% of cobalt based on 100 mol% of the total metal content in the layered lithium nickel-manganese-based composite oxide excluding lithium, and an aluminium coating layer located on the surface of the core particles.

As the price of cobalt, a rare metal, has recently risen sharply, there is a desire and/or demand for the development of positive electrode active materials that exclude cobalt or reduce (substantially reduce) its content (*e.g.*, amount). Alternatives to cobalt-containing positive electrode materials, such as positive electrode active materials having an olivine crystal structure such as lithium iron phosphate (LFP), lithium manganese phosphate (LMP), lithium manganese iron phosphate (LMFP), and/or the like, or spinel crystal structures such as lithium manganese oxide (LMO) and/or the like, have limitations in realizing high capacity due to small amounts of available lithium within the structures. The layered lithium nickel-manganese positive electrode active material has excellent or suitable capacity and efficiency characteristics due to the high available lithium capacity in the structure, making it suitable as a material for high-capacity batteries. However, as a cobalt content (*e.g*., amount), which plays a key role in the layered structure, is reduced, structural stability decreases, resistance increases, and it becomes difficult to secure long life-cycle characteristics. In addition, as the cobalt content (*e.g*., amount) is lowered, side reactions between the positive electrode active material and the electrolyte may be accelerated under high-voltage and high-temperature conditions, resulting in increased amounts of gas generated and reduced life-cycle characteristics.

The positive electrode active material according to one or more embodiments may be a Co-less positive electrode active material including a small or very small amount of cobalt, and including an aluminium coating layer introduced on the surface of layered lithium nickel-manganese-based composite oxide particles including a small amount of cobalt. The positive electrode active material according to one or more embodiments not only has a strengthened particle surface, but also a stronger internal crystal structure, so that the surface does not deteriorate nor does the crystal structure collapse even after repeated charging and discharging. Thus, such positive electrode active materials may realize long life-cycle characteristics and high initial discharge capacity and charge/discharge efficiency characteristics, and allow for excellent or suitable life-cycle characteristics to be achieved even under high-voltage and high-temperature conditions.

In other words, due to the rising cost of cobalt, there is a demand for developing positive electrode active materials that either exclude or substantially reduce cobalt content. Alternatives like lithium iron phosphate (LFP), lithium manganese phosphate (LMP), and lithium manganese oxide (LMO) have limitations in achieving high capacity due to their low lithium availability. Layered lithium nickel-manganese materials offer excellent capacity and efficiency but face challenges in structural stability and cycle life when cobalt content is reduced. This can lead to increased resistance and side reactions under high-voltage and high-temperature conditions. Embodiments of the present disclosure propose a cobalt-less positive electrode active material with an aluminium coating on layered lithium nickel-manganese particles. This material strengthens both the particle surface and internal crystal structure, maintaining performance even after repeated charging and discharging, thus achieving long cycle life and high efficiency, even under demanding conditions. The term "cobalt-less" in the present context refer to materials that either completely exclude cobalt or contain significantly reduced amounts of it. In the context of battery technology, "significantly reduced" may refer to reducing cobalt content to less than or equal to about 2 mol% of the total metal content (e.g. the total metal content excluding lithium), or even lower, depending on the specific application and performance requirements. This reduction aims to maintain battery performance while addressing the high cost, limited supply, and environmental concerns associated with cobalt.

### Core Particles

For example, the core particles may be in the form of a secondary particle in which a plurality of primary particles are agglomerated, and the average particle diameter (D50) of the secondary particle may be about 10 µm to about 18 µm, for example, about 11 µm to about 16 µm, or about 12 µm to about 15 µm. As used herein, when a definition is not otherwise provided, the average particle diameter refers to a diameter (D50) of particles having a cumulative volume of 50 volume% in the particle size distribution that is obtained by measuring the size (diameter or major axis length) of about 20 particles at random in a scanning electron microscope image of the positive electrode active material. If the average particle diameter of the positive electrode active material satisfies the above range, high capacity and long life-cycle characteristics can be realized. In addition, in one or more embodiments, it can be advantageous to form a coating layer.

The positive electrode active material according to one or more embodiments includes about 0.1 mol% to about 2 mol% of cobalt (with respect to the total metal content in the layered lithium nickel-manganese-based composite oxide, excluding lithium). As described in more detail later, the positive electrode active material may be prepared by coating aluminium in a wet coating method on a layered lithium nickel-manganese-based composite oxide including no or a very small amount of cobalt and then dry coating cobalt. Accordingly, the cobalt may exist on the surface of the particle and may also flow into the internal portion of the secondary particle, forming a coating structure at the grain boundary. According to this method, both the internal crystal structure and the surface of the positive electrode active material are strengthened, so that it can exhibit excellent or suitable capacity and life-cycle characteristics even under high-voltage and high-temperature condition.

The positive electrode active material prepared according to one or more embodiments may include core particles in the form of a secondary particle in which a plurality of primary particles are agglomerated, a coating layer located on the surface of the core particle and including aluminium, and a grain boundary coating portion located on the surface of the primary particles inside the secondary particle and including cobalt. When using a nickel-manganese-cobalt-based raw material as a precursor or when doping cobalt by firing the cobalt raw material together when sintering the precursor and lithium raw material, cobalt may exist uniformly (*e.g*., substantially uniformly) inside the secondary particles. However, because the positive electrode active material according to one or more embodiments may be prepared by wet coating aluminium on the surface of the core particle and then dry coating cobalt, and/or the like, cobalt also exists on the surface of the secondary particles, but some of it may diffuse into the interior of the secondary particles and exist at grain boundaries, which are the surfaces of primary particles located inside the secondary particles. In other words, the positive electrode active material may have a structure in which aluminium is coated in a thin, substantially uniform film on the surface of the secondary particles, and cobalt is coated on the grain boundaries inside the secondary particles. These positive electrode active materials can maintain a structurally stable secondary particle form even after repeated charging and discharging, and can achieve excellent or suitable life-cycle characteristics even under high-voltage and high-temperature conditions.

The cobalt content (*e.g*., amount) is about 0.1 mol% to about 2 mol%, for example, about 0.1 mol% to about 1.9 mol%, or about 0.5 mol% to about 1.5 mol%, based on 100 mol% of the total metal content in the layered lithium nickel-manganese-based composite oxide excluding lithium. If the cobalt content (*e.g*., amount) satisfies the above range, the crystal structure can be strengthened by the coating on grain boundaries while reducing the cost, and thus the capacity and life-cycle characteristics under high-temperature and high-voltage conditions can be improved.

In the layered lithium nickel-manganese-based composite oxide, a nickel content (e.g., amount) may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of the total metal content in the layered lithium nickel-manganese-based composite oxide excluding lithium. If the nickel content (*e.g*., amount) satisfies the above ranges, high capacity may be achieved and structural stability may be increased even if the cobalt content (*e.g*., amount) is reduced.

In the layered lithium nickel-manganese-based composite oxide, a manganese content (*e.g*., amount) may be greater than or equal to about 15 mol%, for example about 15 mol% to about 40 mol%, about 15 mol% to about 35 mol%, about 15 mol% to about 30 mol%, or about 20 mol% to about 30% based on 100 mol% of the total metal content in the layered lithium nickel-manganese-based composite oxide excluding lithium. If the manganese content (*e.g.*, amount) satisfies the above ranges, the positive electrode active material may improve structural stability while realizing high capacity.

For example, the layered lithium nickel-manganese-based composite oxide may be a lithium nickel-manganese-aluminium-based composite oxide that further includes aluminium, in addition to nickel and manganese. If the composite oxide includes aluminium, it is advantageous to maintain a stable layered structure even if the content (*e.g*., amount) of cobalt element decreases. An aluminium content (*e.g*., amount) may be greater than 0 mol% and less than or equal to about 3 mol%, greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1.5 mol% to about 2.5 mol% based on 100 mol% of the total metal content excluding lithium in the lithium nickel-manganese-aluminium-based composite oxide. Herein, the aluminium content (*e.g*., amount) refers to a content (*e.g*., amount) of aluminium present in the core particle. If the aluminium content (*e.g*., amount) satisfies the above ranges, a stable layered structure can be maintained even if cobalt is excluded from the core particles, the problem of structure collapse due to charging and discharging can be suppressed or reduced, and long life-cycle characteristics of the positive electrode active material can be realized.

According to one or more embodiments, a concentration of aluminium within the core particle may be substantially uniform. In other words, this means that there is no concentration gradient of aluminium from the center to the surface within the core particle, and/or that an aluminium concentration on the outside of the core particle is neither higher nor lower than on the inside, and that the aluminium within the core particle is evenly distributed. This may be a structure obtained by synthesizing a composite oxide using nickel-manganese-aluminium-based hydroxide as a precursor by using aluminium raw materials during precursor production without additional doping of aluminium during the synthesis of the core particle. The core particle may be a secondary particle in which a plurality of primary particles are agglomerated, and the aluminium content (*e.g*., amount) inside the primary particle may be the same or similar regardless of the location of the primary particle. For example, if a primary particle is selected at a random position in the cross-section of a secondary particle and the aluminium content (*e.g*., amount) is measured inside the primary particle rather than at its interface, regardless of the location of the primary particle, that is, whether the primary particle is close to the center of the secondary particle or close to the surface, the aluminium content (*e.g*., amount) may be the same, similar, and/or substantially uniform. In this structure, a stable layered structure can be maintained even if cobalt is absent or is present in a very small amount, and aluminium byproducts or aluminium aggregates may not be generated, so that the capacity, efficiency, and life-cycle characteristics of the positive electrode active material can be improved at the same time.

The layered lithium nickel-manganese-based composite oxide may be specifically represented by Chemical Formula 1.

Chemical Formula 1 Liₐ₁Niₓ₁Mn_{y1}Co_{z1}Alᵥ₁M¹_{w1}O_{2-b1}X_{b1}

In Chemical Formula 1, 0.9≤a1≤1.8, 0.6≤x1≤0.8, 0.15≤y1≤0.399, 0.001≤z1 ≤0.02, 0≤v1≤0.03, 0≤w1≤0.3, 0.9≤x1+y1+z1+v1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, Y, Zn, and Zr, and X is one or more elements selected from among F, P, and S.

In Chemical Formula 1, for example, 0.9≤a1≤1.5, or 0.9≤a1≤1.2. Additionally, Chemical Formula 1 may include aluminium, and in one or more embodiments, 0.6≤x1≤0.8, 0.15≤y1≤0.299, 0.001≤z1≤0.02, 0<v1≤0.03 (e.g. 0.001≤ v1≤0.03), 0≤w1≤0.3.

In Chemical Formula 1, for example, 0.6≤x1≤0.79, 0.6≤x1≤0.78, 0.6≤x1≤ 0.75, 0.65≤x1≤0.8, or 0.7≤x1≤0.79, and/or 0.15≤y1≤0.35, 0.15≤y1≤0.30, 0.15≤y1≤ 0.29, or 0.2≤y1≤0.3. Additionally, 0.005≤z1≤0.02, or 0.01≤z1≤0.02, 0.01≤v1≤0.025, 0.01<v1≤0.02, or 0.01<v1≤0.019, and/or 0≤w1≤0.28, 0≤w1≤0.27, 0≤w1≤0.26, 0≤w1 ≤0.25, 0≤w1≤0.24, 0≤w1≤0.23, 0≤w1≤0.22, 0≤w1≤0.21, 0≤w1≤0.2, 0≤w1≤0.15, 0≤ w1≤0.1, or 0≤w1≤0.09.

### Coating Layer

The positive electrode active material includes an aluminium coating layer located on the surface of the secondary particles. By including an aluminium-rich layer on the surface of the positive electrode active material, side reactions with the electrolyte solution are effectively suppressed or reduced at high voltage, thereby improving capacity and life-cycle characteristics at high voltage. The layered lithium nickel-manganese-based composite oxide is susceptible to chemical attacks from components in an electrolyte, if (*e.g.*, when) a battery is operated under high-voltage or high-temperature conditions, and thus may have lots of side reactions with the electrolyte, resulting in an increased amount of gas generated, and thereby deteriorating battery life-cycle characteristics and safety, but these problems may be addressed by introducing the coating layer according to one or more embodiments.

The aluminium coating layer may include, for example, aluminium oxide, lithium-aluminium oxide, and/or a (*e.g*., any suitable) combination thereof, for example, LiAlO₂.

In the positive electrode active material, an aluminium content (*e.g*., amount) in the coating layer may be about 0.1 mol% to 3 mol%, for example, about 0.1 mol% to about 2 mol%, about 0.2 mol% to about 1.9 mol%, about 0.3 mol% to about 1.8 mol%, about 0.5 mol% to about 1.5 mol%, or about 0.8 mol% to about 1.3 mol% based on about 100 mol% of total metal content in the positive electrode active material excluding lithium. In the coating layer, the content (*e.g*., amount) of aluminium or other components may be measured, for example, through a scanning electron microscopy and energy dispersive X-ray spectroscopy (SEM-EDS) analysis of the surface or a cross-section of the positive electrode active material. In the coating layer, if the aluminium content (*e.g*., amount) satisfies the aforementioned ranges, a coating layer with a substantially uniform and thin thickness may be formed, and side reactions between the positive electrode active material and the electrolyte may be effectively suppressed or reduced without increasing resistance, thereby improving life-cycle characteristics of the rechargeable lithium battery at high voltages. In other words, in the positive electrode active material, the aluminium content in the coating layer ranges from about 0.1 mol% to 3 mol% or about 0.1 mol% to 2 mol% of the total metal content, excluding lithium. This can be measured using techniques like scanning electron microscopy and energy dispersive X-ray spectroscopy (SEM-EDS). When the aluminium content falls within these ranges, it forms a uniform and thin coating layer that effectively suppresses side reactions between the positive electrode active material and the electrolyte, without increasing resistance. This improves the life-cycle characteristics of the rechargeable lithium battery, especially at high voltages.

Because a layered lithium nickel-manganese-based composite oxide may have a significantly different residual lithium content on the particle surface and different characteristics from oxides with a different composition, for example, lithium nickel-cobalt-manganese-based composite oxide, lithium nickel-cobalt-aluminium-based composite oxide, lithium cobalt-based oxide, and/or the like, it is impracticable to form a satisfactory coating layer in the form of a substantially uniform film using a generally utilized and/or generally available coating method. Accordingly, one or more embodiments provide a method of (i) first preparing a coating solution by adding a coating raw material to an aqueous solvent and completely dissolving it therein by a salt-dissolution method, (ii) adding core particles to the coating solution and mixing them in preparation for coating, and (iii) removing the solvent therefrom and then performing drying and a heat treatment to introduce a substantially uniform coating layer. This method is a salt-dissolution wet coating method and a pre-addition method in which the coating raw material, which is a salt, is first completely dissolved, and then the active material particles are added thereto. Through such a method, a coating layer may be successfully formed as a substantially uniform and thin film on the surface of layered lithium nickel-manganese-based composite oxide.

According to the coating method, compared to a general dry method or a post-addition wet method, a content (e.g., amount) of a coating element (coating material or substance) on the active material surface may be increased (e.g., greatly increased). For example, the coating content (*e.g*., amount) on the positive electrode active material surface, which is measured through EP-EDS analysis, may be about 5 at% to about 35 at%, for example, about 5 at% to about 30 at%, about 5 at% to about 25 at%, about 10 at% to about 25 at%, or about 10 at% to about 20 at% based on about 100 at% of the total metal content in the coating element on the active material surface excluding lithium. Within these ranges, the coating layer may not increase resistance of the positive electrode active material, but may still effectively improve high voltage characteristics.

The aluminium coating layer may be in the form of a film that continuously surrounds the surface of the secondary particle, and for example, may be in the form of a shell that surrounds the entire surface of the secondary particle. This is distinct from a structure in which only a portion of the surface of the secondary particle is partially coated. According to one or more embodiments, the coating layer may be formed to entirely cover the surface of the secondary particle and may be formed to be very thin and to have a substantially uniform thickness, and therefore the positive electrode active material may not increase resistance or decrease capacity, it may improve structural stability, effectively suppress side reactions with electrolytes, reduce the amount of gas generated under high-voltage and high-temperature conditions, and may achieve long life-cycle characteristics.

The aluminium coating layer may have a thickness of about 5 nm to about 500 nm, for example, 10 nm to about 500 nm, about 5 nm to about 450 nm, about 5 nm to about 400 nm, about 5 nm to about 350 nm, about 5 nm to about 300 nm, about 5 nm to about 250 nm, about 5 nm to about 200 nm, about 5 nm to about 150 nm, about 5 nm to about 100 nm, about 5 nm to 80 nm, about 10 nm to about 50 nm, about 20 nm to about 500 nm, about 30 nm to about 500 nm, or about 40 nm to about 500 nm. For example, the thickness of the coating layer may be less than or equal to about 40 nm. If the coating layer satisfies the aforementioned thickness ranges, the structural stability of the positive electrode active material may be improved without increasing resistance or reducing capacity due to the coating, and side reactions with the electrolyte may be effectively suppressed or reduced. The thickness of the coating layer may be measured through, for example, scanning electron microscopy (SEM), transmission electron microscopy (TEM), time-of-flight secondary ion mass spectrometry (TOF-SIMS), X-ray photoelectron spectroscopy (XPS), or energydispersive X-ray spectroscopy (EDS) analysis, and the thickness range of the coating layer may be measured through a TEM-EDS line profile.

The aluminium coating layer of the positive electrode active material may be thin and substantially uniform in thickness, at the level of several to hundreds of nanometers. For example, a deviation in coating layer thickness in one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above ranges means that a coating layer of substantially uniform thickness is well formed in a form of a film on the surface of the positive electrode active material particle. Accordingly, the structural stability of the positive electrode active material is improved, side reactions with the electrolyte may be effectively suppressed or reduced, and an increase in resistance or decrease in capacity due to coating may be minimized or reduced.

The aluminium coating layer may further include nickel, manganese, and/or a (e.g., any suitable) combination thereof in addition to aluminium. The nickel and manganese included in the core particles may have been introduced during the formation of the aluminium coating layer, and their content (*e.g*., amount) is not particularly limited. The aluminium coating layer according to one or more embodiments essentially includes aluminium and optionally includes nickel and manganese, and is formed to be thin and substantially uniform in thickness, thereby improving the high voltage characteristics of the positive electrode active material and improving the life-cycle characteristics.

Additionally, the aluminium coating layer may include sulfur in addition to aluminium. The sulfur may be introduced during the process of adding aluminium sulfate among the aluminium raw material used to form the aluminium coating layer, and its content (*e.g.*, amount) is not particularly limited. The aluminium coating layer according to one or more embodiments includes aluminium and optionally includes sulfur, and can improve the high voltage characteristics and life-cycle characteristics of the positive electrode active material.

In addition to the aluminium coating layer, the positive electrode active material may further include a coating layer including B, Mg, Ti, V, W, Y, Zr, and/or a (*e.g.*, any suitable) combination thereof. In such embodiments, structural stability can be improved and life-cycle characteristics can be improved.

As an example, the positive electrode active material may further include a zirconium coating layer located on the aluminium coating layer. A zirconium content (*e.g*., amount) of the coating layer may be about 0.05 mol% to about 1 mol%, for example, about 0.1 mol% to about 1 mol%, about 0.1 mol% to about 0.9 mol%, about 0.1 mol% to about 0.8 mol%, or about 0.1 mol% to about 0.6 mol% based on about 100 mol% of the total metal content excluding lithium in the positive electrode active material. If the zirconium content (*e.g.*, amount) satisfies the aforementioned ranges, a satisfactory coating layer may be formed without deteriorating capacity of the positive electrode active material and without increasing resistance, and side reactions with an electrolyte may be successfully suppressed or reduced, additionally improving capacity characteristics and life-cycle characteristics under high voltage driving conditions.

The positive electrode active material may further include a yttrium coating layer. In such embodiments, a yttrium content (*e.g.*, amount) of the positive electrode active material may be about 0.1 mol% to about 1 mol% based on about 100 mol% of the total metal content in the positive electrode active material excluding lithium.

Also, in the process of forming the coating layer, aluminium may be diffused into secondary particles. Accordingly, the positive electrode active material according to one or more embodiments may further include a grain boundary coating portion including aluminium on the surface of primary particles inside each of the secondary particles. The inside of each secondary particle may refer to entire inside surfaces of the secondary particles excluding the ourter surface of the secondary particle or to a region up to about 60 length% (*i.e*., 60% of the length) from the center of the secondary particle to the surface of the secondary particle (*i.e.*, in a direction from the center towards the surface of the secondary particles). The grain boundary coating portion is distinguished from the coating layer on the secondary particle surface and refers to a coating portion on the surface of the primary particles inside the secondary particles. In other words, the grain boundary coating portion is distinct from the coating layer on the surface of the secondary particles and refers to a coating on the surface of the primary particles within each of the secondary particles. The grain boundary coating portion may be confirmed through SEM-EDS analysis on a cross-section of the positive electrode active material. The aluminium grain boundary coating portion may further structurally stabilize the positive electrode active material and improve life-cycle characteristics.

An aluminium content (*e.g*., amount) in the grain boundary coating portion is not particularly limited, but may be smaller than an aluminium content (e.g., amount) in the coating layer.

### Bimodal

In one or more embodiments, a positive electrode active material includes (1) a first positive electrode active material including core particles including a layered lithium nickel-manganese-based composite oxide including about 0.1 mol% to about 2 mol% of cobalt based on 100 mol% of the total metal content in the layered lithium nickel-manganese-based composite oxide excluding lithium. The core or secondary particles may each be formed by agglomerating a plurality of primary particles, and an aluminium coating layer may be located on the surface of the core particles; and (2) a second positive electrode active material including a layered lithium nickel-manganese-based composite oxide, in the form of single particles (*e.g.*, each being a monolithic particle), and having a smaller average particle diameter (D50) than the first positive electrode active material.

In other words, in one or more embodiments, a positive electrode active material may include two types of materials (bimodal):
(1) a first positive electrode active material including or composed of core particles made of a layered lithium nickel-manganese-based composite oxide with about 0.1 mol% to 2 mol% cobalt, excluding lithium. These core particles are formed by agglomerating multiple primary particles and have an aluminium coating layer on their surface; and
(2) a second positive electrode active material including or composed of single particles of a layered lithium nickel-manganese-based composite oxide, which have a smaller average particle diameter (D50) than the first positive electrode active material.

The first positive electrode active material may correspond to the aforementioned positive electrode active material, and may be expressed here as large particles. The second positive electrode active material may be expressed as small particles.

By properly mixing large particles in the form of secondary particles and small particles in the form of single particles, capacity and energy density of the lithium nickel-manganese-based positive electrode may be maximized or increased and high-temperature life-cycle characteristics and high-voltage characteristics can be improved. As used herein, when a definition is not otherwise provided, the average particle diameter refers to a diameter (D50) of particles having a cumulative volume of 50 volume% in the particle size distribution that is obtained by measuring the size (diameter or major axis length) of about 20 particles at random in a scanning electron microscope image of the positive electrode active material.

The average particle diameter (D50) of the secondary particles of the first positive electrode active material may be, for example, about 10 µm to about 18 µm, or about 12 µm to about 16 µm. The average particle diameter (D50) of the single particles of the second positive electrode active material may be, for example, about 1 µm to about 8 µm, about 1 µm to about 7 µm, about 1.5 µm to about 6 µm, or about 2 µm to about 5 µm. If the average particle diameter of each positive electrode active material satisfies the above ranges, high energy density can be achieved and excellent or suitable life-cycle characteristics can be achieved.

The first positive electrode active material may be included in an amount of about 60 wt% to about 95 wt%, for example about 70 wt% to about 90 wt%, based on a total of 100 wt% of the first positive electrode active material and the second positive electrode active material. The second positive electrode active material may be included in an amount of about 5 wt% to about 40 wt%, for example, about 10 wt% to about 30 wt%, based on a total of 100% by weight of the first positive electrode active material and the second positive electrode active material. If the mixing ratio of the first and second positive electrode active materials satisfies the above ranges, energy density can be increased while maximizing or increasing capacity.

Because the details of the first positive electrode active material may be the same as described above, a detailed description thereof may not be repeated.

The single particles of the second positive electrode active material may exist alone without a grain boundary within the particle, may be composed of one particle, and may be a monolith structure, a one body structure, or a non-agglomerated particle, in which particles are not agglomerated with each other but may exist as an independent phase in terms of morphology, and may be expressed as one body particle, or single grain, for example, as a single crystal.

For example, the second positive electrode active material may be a type (kind) of cobalt-free positive electrode active material including greater than or equal to about 0 mol% and less than about 0.1 mol% of cobalt based on 100 mol% of the total metal content in the layered lithium nickel-manganese-based composite oxide excluding lithium, where the cobalt content (*e.g*., amount) may be less than or equal to about 0.09 mol%, less than or equal to about 0.05 mol%, less than or equal to about 0.01 mol%, or less than or equal to about 0.001 mol%.

In the second positive electrode active material, a nickel content (*e.g.*, amount) may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of the total metal content excluding lithium in the layered lithium nickel-manganese-based composite oxide. If the nickel content (e.g., amount) satisfies the above ranges, high capacity may be achieved and structural stability may be increased even if the cobalt content (*e.g.*, amount) is reduced.

For example, a manganese content (*e.g.*, amount) in the second positive electrode active material may be, for example, greater than or equal to about 15 mol%, for example, about 15 mol% to about 40 mol%, about 15 mol% to about 35 mol%, about 15 mol% to about 30 mol%, or about 20 mol% to about 30% based on 100 mol% of the total metal content excluding lithium in the layered lithium nickel-manganese-based composite oxide. If the manganese content (*e.g*., amount) satisfies the above ranges, the positive electrode active material may improve structural stability while realizing high capacity.

The layered lithium nickel-manganese-based composite oxide of the second positive electrode active material may be a lithium nickel-manganese-aluminium-based composite oxide that further includes aluminium in addition to nickel and manganese. If the composite oxide includes aluminium, a stable layered structure may be maintained even if the cobalt element is excluded from the structure. An aluminium content (*e.g*., amount) based on 100 mol% of the lithium nickel-manganese-aluminium-based composite oxide may be greater than 0 mol% and less than or equal to about 3 mol%, greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%. If the aluminium content (*e.g*., amount) satisfies the above ranges, a stable layered structure may be maintained even if cobalt is excluded, the problem of structural collapse due to charging and discharging may be suppressed or reduced, and long life-cycle characteristics of the positive electrode active material may be realized.

The layered lithium nickel-manganese-based composite oxide of the second positive electrode active material may be represented by Chemical Formula 2.

Chemical Formula 2 Liₐ₂Niₓ₂Mn_{y2}Al_{z2}M²_{w2}O_{2-b2}X_{b2}

In Chemical Formula 2, 0.9≤a2≤1.8, 0.6≤x2≤0.8, 0.15≤y2≤0.4, 0≤z2≤0.03, 0≤w2≤0.3, 0.9≤x2+y2+z2+w2≤1.1, and 0≤b2≤0.1, M² is one or more elements selected from among B, Ba, Ca, Ce, Cr, Cu, Fe, Mg, Mo, Nb, Si, Sn, Sr, Ti, V, W, Y, Zn, and Zr, and X is one or more elements selected from among F, P and S.

In Chemical Formula 2, for example, 0.9≤a2≤1.5, or 0.9≤a2≤1.2. Additionally, Chemical Formula 2 may include aluminium, and in one or more embodiments, 0.6≤x2≤0.8, 0.15≤y2≤0.39, 0.01≤z2≤0.03, and 0≤w2≤0.29 may be satisfied, or for example, 0.6≤x2≤0.8, 0.15≤y2≤0.39, 0.01<z2≤0.03, and 0≤w2≤0.29 may be satisfied.

In Chemical Formula 2, for example, 0.6≤x2≤0.79, 0.6≤x2≤0.78, 0.6≤x2≤ 0.75, 0.65≤x2≤0.8, or 0.7≤x2≤0.79, 0.1≤y2≤0.35, 0.15≤y2≤0.30, 0.15≤y2≤0.29, 0.15 ≤y2≤0.39, or 0.2≤y2≤0.3, 0.01≤z2≤0.025, 0.01<z2≤0.02, or 0.01<z2≤0.019, and/or 0 ≤w2≤0.28, 0≤w2≤0.27, 0≤w2≤0.26, 0≤w2≤0.25, 0≤w2≤0.24, 0≤w2≤0.23, 0≤w2≤ 0.22, 0≤w2≤0.21, 0≤w2≤0.2, 0≤w2≤0.15, 0≤w2≤0.1, or 0≤w2≤0.09.

The second positive electrode active material may further include a coating layer located on the surface of the single particle and including Al, B, Mg, Ti, V, W, Y, Zr, and/or a (*e.g*., any suitable) combination thereof. The content (*e.g.*, amount) of the coating raw material may be about 0.1 mol% to about 5 mol%, for example, about 0.1 mol% to about 3 mol%, about 0.3 mol% to about 2 mol%, or about 0.5 mol% to about 1.5 mol% based on 100 mol% of the total metal content excluding lithium in the second positive electrode active material. If it includes such a coating layer, the second positive electrode active material can achieve improved life-cycle characteristics.

As an example, the second positive electrode active material may include an aluminium coating layer located on the surface of the single particle. The second positive electrode active material may include an aluminium-rich layer on the surface and thus may effectively suppress or reduce side reactions with an electrolyte solution at high voltages and thus may improve capacity and life-cycle characteristics at high voltages.

The aluminium content (*e.g*., amount) of the coating layer of the second positive electrode active material may be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on about 100 mol% of the total metal content excluding lithium in the second positive electrode active material. This refers to only an aluminium content (*e.g.*, amount) included in the coating layer separately from aluminium that may be included inside the single particles. The aluminium content (*e.g.,* amount) in the coating layer may be, for example, measured through SEM-EDS analysis on the surface or in a cross-section of the positive electrode active material. In the coating layer, if the aluminium content (e.g., amount) satisfies the aforementioned ranges, a substantially uniform and thin coating layer may be formed to suppress or reduce resistance in the positive electrode active material, effectively suppress or reduce side reactions with an electrolyte, and thus may improve life-cycle characteristics of a rechargeable lithium battery under high voltage and high temperature conditions. For example, if the aluminium content (*e.g.,* amount) of the coating layer is excessive, a substantially uniform coating layer may not be formed, or resistance may increase, deteriorating charge and discharge efficiency and life-cycle characteristics. If the aluminium content (*e.g.,* amount) of the coating layer is too small, a coating layer with an appropriate or suitable thickness may not be formed, deteriorating the ability to suppress or reduce side reactions with an electrolyte.

For example, the coating layer of the second positive electrode active material may further include yttrium. A yttrium content (e.g., amount) of the coating layer of the second positive electrode active material may be about 0.1 mol% to about 1 mol%, for example, about 0.1 mol% to about 0.9 mol%, about 0.1 mol% to about 0.8 mol%, about 0.1 mol% to about 0.6 mol%, about 0.1 mol% to about 0.4 mol%, or about 0.1 mol% to about 0.3 mol% based on about 100 mol% of the total metal content excluding lithium in the second positive electrode active material. If the yttrium content (e.g., amount) satisfies the aforementioned ranges, a satisfactory coating layer may be formed without deteriorating capacity of the positive electrode active material or increasing resistance, thus effectively suppressing or reducing side reactions with an electrolyte and effectively reducing an amount of gas generated under high-voltage or high-temperature conditions.

The coating layer of the second positive electrode active material may be in the form of a thin film continuously around (*e.g.*, surrounding) the surface of the single particles, for example, in the form of a shell entirely around (*e.g.,* surrounding) the surface of the single particles. This is distinguished from a structure of being coated on a portion of the surface of the particles. According to one or more embodiments, the coating layer may not only be in the form of entirely around (*e.g.,* surrounding) the surface of the single particles but also have a very thin and substantially uniform thickness and accordingly, may improve structural stability of the positive electrode active material without increasing resistance or deteriorating capacity and may effectively suppress or reduce side reactions with an electrolyte, resultantly realizing long life-cycle characteristics at high voltages.

The coating layer of the second positive electrode active material may have a thickness of about 5 nm to about 500 nm, for example about 5 nm to about 450 nm, about 5 nm to about 400 nm, about 5 nm to about 350 nm, about 5 nm to about 300 nm, about 5 nm to about 250 nm, about 5 nm to about 200 nm, about 5 nm to about 150 nm, about 5 nm to about 100 nm, about 5 nm to 80 nm, about 10 nm to about 50 nm, about 20 nm to about 500 nm, about 30 nm to about 500 nm, or about 40 nm to about 500 nm. For example, the thickness of the coating layer may be less than or equal to about 40 nm. If the coating layer satisfies the aforementioned thickness ranges, the structural stability of the positive electrode active material may be improved without increasing resistance or reducing capacity due to the coating, and side reactions with the electrolyte may be effectively suppressed or reduced. The thickness of the coating layer may be measured through, for example, SEM, TEM, TOF-SIMS, XPS, or EDS analysis, and the thickness range of the coating layer may be measured through TEM-EDS line profile.

In the coating layer of the second positive electrode active material, aluminium may exist in the form of a substantially continuous film, and yttrium may exist in the form of islands (*e.g.,* a plurality of separate island-like regions on the surface of the second positive electrode material) due to characteristics of each element.

In one or more embodiments, aluminium and yttrium may be mixed in one coating layer, wherein the aluminium may exist in the form of a substantially continuous film, while the yttrium may exist in the form of islands, but the present disclosure is not limited thereto.

In one or more embodiments, the aluminium and the yttrium may each form a separate layer. For example, the second positive electrode active material may include a first coating layer positioned on the surface of the single particles and containing aluminium and a second coating layer positioned on the first coating layer and containing yttrium. The first coating layer is formed as a thin film, as the aluminium is first attached to or absorbed at (on) the surface of the single particles, and the yttrium is coated thereon to form the second coating layer. Of course, the aluminium and the yttrium may be mixed in the first coating layer and the second coating layer, but the first coating layer may be an aluminium-rich coating layer including aluminium as a primary component, and the second coating layer may be a yttrium-rich coating layer including yttrium as a primary component. Herein, in the second coating layer, the yttrium may exist in the form of islands, but the present disclosure is not particularly limited thereto.

The first coating layer and the second coating layer may have no particular limitation with respect to their thicknesses, but the first coating layer may have a thickness of about 5 nm to about 200 nm, for example, about 5 nm to about 100 nm, about 5 nm to about 80 nm, or about 10 nm to about 50 nm. The second coating layer may have a thickness of about 5 nm to about 300 nm, for example, about 5 nm to about 200 nm, about 5 nm to about 100 nm, about 5 nm to about 80 nm, or about 10 nm to about 50 nm. If each thickness satisfies the aforementioned ranges, the coating layers may neither increase resistance nor reduce capacity, but may improve structural stability of the positive electrode active material and effectively suppress or reduce side reactions with an electrolyte and thereby, improve life-cycle characteristics at high voltages.

In one or more embodiments, the positive electrode active material may not include (*e.g.*, may exclude any) sodium. In general, sodium ions can be used in the preparing process of a positive electrode active material, but according to the preparing method described in more detail later, the positive electrode active material particles with a stable structure and a coating layer of substantially uniform thickness can be formed without using sodium ions.

The second positive electrode active material according to one or more embodiments may include a sulfur (S) component on the surface, which may be due to the aluminium coating raw material.

### Method of Preparing Positive Electrode Active Material

The positive electrode active material according to one or more embodiments may be prepared by (i) preparing core particles that include a layered lithium nickel-manganese-based composite oxide and are in the form of secondary particles in which a plurality of primary particles are agglomerated; (ii) preparing an aluminium coating solution including an aqueous solvent and an aluminium raw material; (iii) adding the core particles to the aluminium coating solution, mixing them, and then drying them to prepare a coated product, and (iv) dry mixing the coated product with the cobalt raw material and performing a heat treatment.

In the (i) step (*e.g.*, act or task), the core particles may be, for example, obtained by mixing a nickel-manganese-based composite hydroxide and a lithium raw material and performing a first heat treatment. The nickel-manganese-based composite hydroxide is a precursor of the core particle and may not include (*e.g.,* may exclude any) cobalt or may include a very small amount of cobalt, and, for example, it may be a cobalt-free nickel-manganese-based composite hydroxide. The nickel-manganese-based composite hydroxide can be produced by a general co-precipitation method.

In the nickel-manganese-based composite hydroxide, a nickel content (**e.g**., amount) based on 100 mol% of the total metal content included in the nickel-manganese-based composite hydroxide may be about 60 mol% to about 80 mol%, for example about 65 mol% to about 80 mol%, about 70 mol% to about 80 mol%, about 60 mol% to about 79 mol%, about 60 mol% to about 78 mol%, or about 60 mol% to about 75 mol%. If the nickel content (*e.g*., amount) satisfies the aforementioned ranges, high-capacity can be realized and structural stability can be increased even if the cobalt content (*e.g.*, amount) is reduced.

In the nickel-manganese-based composite hydroxide, a manganese content (*e.g.,* amount) based on 100 mol% of the total metal content included in the nickel-manganese-based composite hydroxide may be greater than or equal to about 15 mol%, for example about 15 mol% to about 40 mol%, about 15 mol% to about 35 mol%, about 15 mol% to about 30 mol%, or about 20 mol% to 30 mol%. If the manganese content (*e.g.,* amount) satisfies the aforementioned ranges, the structural stability of the positive electrode active material can be increased while realizing high-capacity, and the economic efficiency can be increased by lowering the production price.

In one or more embodiments, if (*e.g.,* when) the nickel-manganese-based composite hydroxide further includes aluminium, an aluminium content (*e.g.,* amount) based on 100 mol% of the total metal content included in the nickel-manganese-based composite hydroxide may be greater than 0 mol% and less than or equal to about 3 mol%, greater than or equal to about 0.1 mol%, greater than or equal to about 0.5 mol%, or greater than or equal to about 1 mol%, for example about 1 mol% to about 3 mol%, about 1 mol% to about 2.5 mol%, about 1 mol% to about 2 mol%, or about 1 mol% to about 1.9 mol%. If the aluminium content (*e.g.,* amount) in the composite hydroxide satisfies the aforementioned ranges, the structural stability of the positive electrode active material can be increased while realizing high-capacity, and the economic efficiency can be increased by lowering the production price.

In a method of preparing a positive electrode active material according to one or more embodiments, in the preparation of core particles, aluminium is not additionally doped, but an aluminium raw material may be used to prepare a precursor, so that a nickel-manganese-aluminium-based composite hydroxide, in which aluminium is uniformly (*e.g.,* substantially uniformly) dispersed in the structure, may be used as the precursor. When such a precursor is used, the positive electrode active material may stably maintain a layered structure without cobalt despite repeated charges and discharges, and aluminium byproducts or aluminium aggregates may not be formed, improving capacity and efficiency characteristics and life-cycle characteristics of the positive electrode active material.

The cobalt content (*e.g.,* amount) in the nickel-manganese-based composite hydroxide may be less than or equal to about 0.01 mol%, less than or equal to about 0.005 mol%, less than or equal to about 0.001 mol%, for example about 0 mol% to about 0.01 mol%, about 0 mol% to about 0.005 mol%, or about 0 mol% to about 0.001 mol% based on 100 mol% of the total metal content included in the nickel-manganese-based composite hydroxide. This nickel-manganese-based composite hydroxide may be economical as it avoids the increase in unit cost caused by cobalt, maximizes capacity, and improves structural stability.

The nickel-manganese-based composite hydroxide is in the form of particles (e.g., includes a plurality of particles), and an average particle diameter (D₅₀) of the particles may be about 10 µm to about 18 µm, for example about 11 µm to about 18 µm, or about 12 µm to about 16 µm.

The nickel-manganese composite hydroxide and lithium raw material may be mixed at a molar ratio of about 1:0.9 to about 1:1.8, for example about 1:0.9 to about 1:1.5, or about 1:1 to about 1:1.2.

The first heat treatment may be carried out in an oxygen atmosphere and at a temperature range of, for example, about 750 °C to about 950 °C, or about 780 °C to about 900 °C, or about 810 °C to about 890 °C, for about 2 hours to about 20 hours, or about 4 hours to about 12 hours.

The lithium nickel-manganese-based composite oxide can be obtained through the first heat treatment. In the obtained lithium nickel-manganese-based composite oxide, a nickel content (*e.g*., amount) may be about 60 mol% to about 80 mol%, a manganese content (*e.g.*, amount) may be greater than or equal to about 15 mol%, an aluminium content (*e.g.,* amount) may be about 0 mol% to about 3 mol%, and a cobalt content (*e.g.,* amount) may be included in a very small amount of about 0 mol% to about 0.01 mol% based on 100 mol% of the total metal content included in the nickel-manganese-based composite oxide excluding lithium. Such a composite oxide may have a significantly different residual lithium content on the particle surface and different various characteristics from oxides with a different composition, for example, lithium nickel-cobalt-manganese-based composite oxide, lithium nickel-cobalt-aluminium-based composite oxide, lithium cobalt-based oxide, and/or the like, and thus it is impracticable to form a satisfactory coating layer in the form of a substantially uniform film using a generally utilized and/or generally available coating method.

Accordingly, in the method of preparing the positive electrode active material according to one or more embodiments, in the steps (ii) and (iii), a substantially uniform coating layer can be introduced to the positive electrode active material through a method of preparing an aluminium coating solution in which the salt is completely dissolved by salt-dissolution method by adding and mixing an aqueous solvent and an aluminium raw material, and adding core particles to an aluminium coating solution, mixing them, drying them, and coating them.

This method is a salt-dissolution wet coating method and a pre-addition method in which the coating raw material, which is a salt, is first completely dissolved, and then the active material particles are added thereto. Through such a method, a coating layer may be successfully formed as a substantially uniform and thin film on the surface of a layered lithium nickel-manganese-based composite oxide. According to the coating method, compared to a general dry method or a post-addition wet method, a content (*e.g.,* amount) of a coating element on the active material surface may be increased (*e.g.,* greatly increased).

The aqueous solvent may include distilled water, an alcohol-based solvent, and/or a (*e.g.,* any suitable) combination thereof. The aluminium raw material may be aluminium sulfate. The aluminium sulfate may be an optimal or suitable raw material for forming a substantially uniform aluminium coating layer on the layered lithium nickel-manganese-based composite oxide.

An aluminium content (*e.g.,* amount) of the aluminium raw material in the coating layer may be about 0.1 mol% to about 3.0 mol%, for example about 0.1 mol% to about 2.0 mol%, about 0.5 mol% to about 1.5 mol%, or about 0.7 mol% to about 1.3 mol% based on 100 mol% of the total metal excluding lithium in the core particles. This aluminium content (*e.g.*, amount) does not include aluminium from the aluminium raw material included in the core particles (*i.e.,* the amount only includes the aluminium in the coating layer). If the aluminium coating content (*e.g.,* amount) is designed within the aforementioned ranges, the coating layer may be formed to have a thin and substantially uniform thickness of several to hundreds of nanometers, reducing an amount of gas generated by rechargeable lithium batteries under high-voltage or high-temperature operation conditions and improving high-capacity and long life-cycle characteristics.

For the coating layer, the adding and mixing of the aluminium raw material into the aqueous solvent may be performed for about 1 minute to about 60 minutes, for example, about 3 minutes to about 30 minutes, or about 5 minutes to about 10 minutes. In one or more embodiments, the mixing may be performed at a speed of about 100 rpm to about 800 rpm, for example, about 200 rpm to about 600 rpm, or about 250 rpm to about 500 rpm. Under these conditions, the aluminium raw material is completely dissolved in the aqueous solvent to obtain a colorless transparent coating solution, and this coating solution may be used to effectively form the substantially uniform coating layer according to one or more embodiments. The coating solution, which completed with the mixing, may have, for example, a pH of about 1.5 to about 4, for example, about 2.0 to about 3.4, about 2.5 to about 3.3, about 2.7 to about 3.3, or about 2.9 to about 3.2.

To add the core particles to the prepared coating solution, the core particles are added while stirring the coating solution in order to increase coating quality.

In one or more embodiments, the time taken to add the core particles to the coating solution may be about 30 seconds per each about 500 g to about 2 minutes per each about 500 g, for example, about 30 seconds per each about 500 g to about 1.5 minutes per each about 500 g, and/or the like. The speed of adding the core particles may be appropriately or suitably adjusted to control the pH of a supernatant after completing the coating, inducing effective formation of the substantially uniform coating layer according to one or more embodiments. If the rate of adding core particles is too slow, a reaction rate for each particle may vary and a substantially uniform coating layer may not be formed. Additionally, if the rate of adding core particles is too fast, the pH may change quickly and a substantially uniform coating layer may not be formed.

After the core particles are all added to the coating solution, the stirring may be performed for about 15 minutes to about 60 minutes, for example, about 20 minutes to about 50 minutes, or about 30 minutes to about 45 minutes. The amount of time from the start of adding of the core particles to the coating solution to completion of the stirring (i.e., the coating reaction time) may be adjusted to any suitable time within about 1 hour.

In one or more embodiments, when the adding and mixing of the core particles to the coating solution is stopped, the pH of the supernatant after completing the mixing or the coating may be in a range of about 5.5 to about 8.5. If the pH of the supernatant is less than 5.5, the acidity may become strong and a substantially uniform coating layer may not be formed, and if the pH is more than 8.5, the alkalinity may become strong, making it difficult to form a substantially uniform aluminium coating layer.

In order to remove the aqueous solvent from the mixed solution, the coating solution may be, for example, dried at about 40 °C to about 240 °C, about 100 °C to about 220 °C, or about 150 °C to about 200 °C under a vacuum condition, and under these conditions a satisfactory coated product may be obtained.

The dried product (i.e., after removing the aqueous solvent from the coating solution) may be referred to as a coated product. The coated product includes core particles and a coating layer located on the surface of the core particle and including aluminium. For example, the Al-containing coating layer may include a fiber shape (*e.g.,* in a form of fibers), for example, a mesh shape or a spider web shape. Such a mesh may be continuously formed over the entire surface of the core particles. The mesh-shaped coating layer may wrap the core particles with a very thin and substantially uniform thickness to strengthen the surface of the positive electrode active material and improve structural stability and thereby, enhance high-temperature and high-voltage characteristics.

The (iv) step (*e.g.*, act or task) is dry-mixing the coated product and a cobalt raw material and heat-treating the mixture (*e.g.*, via a second heat treatment) to obtain positive electrode active material, wherein an aluminium coating layer containing LiAlO₂ and/or the like is formed on the surface of the secondary particle (*e.g.,* each secondary particle), and a cobalt coating is formed on the secondary particle surface and at the grain boundary which is the surface of the primary particles inside the secondary particle (*e.g.,* each secondary particle). Resultantly, the primary particle surfaces are coated with cobalt, and the secondary particle surfaces are coated and modified with aluminium and cobalt, resulting in improved capacity and life-cycle characteristics and reducing the amount of gas generated at high-temperatures.

For example, the cobalt raw material may be cobalt hydroxide (Co(OH)₂), cobalt oxide, and/or a (*e.g.,* any suitable) combination thereof. In the step (*e.g.,* act or task) of dry mixing the coated product and the cobalt raw material, a lithium raw material may be additionally mixed. In this case, the lithium raw material may be lithium hydroxide (LiOH), for example, anhydrous lithium hydroxide.

Based on 100 mol% of the total metal content excluding lithium in the positive electrode active material, a cobalt content (*e.g.,* amount) of the cobalt raw material may be designed to be about 0.1 mol% to about 2.0 mol%, for example, about 0.5 mol% to about 2.0 mol%, or about 1.0 mol% to about 2.0 mol%. The cobalt content (*e.g.,* amount) may be designed within the aforementioned ranges, so that cobalt may be diffused into the core particle as well as through the core particle surface to coat the grain boundaries of the primary particles, improving life-cycle characteristics under high-voltage or high-temperature driving conditions and concurrently (*e.g.*, simultaneously), enhancing initial charge/discharge efficiency.

In the (iv) step (*e.g.,* act or task), in the process of dry-mixing the coated product with the cobalt raw material, a lithium raw material and a zirconium raw material may be mixed together to provide a zirconium coating. The zirconium raw material may be, for example, zirconium oxide.

Based on 100 mol% of the total metal content excluding lithium in the positive electrode active material, a zirconium content (*e.g.,* amount) of the zirconium raw material may be designed to be about 0.01 mol% to about 1.5 mol%, for example, about 0.05 mol% to about 1.0 mol%, about 0.1 mol% to about 1.0 mol%, about 0.1 mol% to about 0.5 mol%, or about 0.1 mol% to about 0.4 mol%. The zirconium coating content (*e.g.,* amount) may be designed within the aforementioned ranges to form a coating layer with a very thin thickness of tens to hundreds of nanometers, improving life-cycle characteristics at high-voltage or high-temperature driving conditions and concurrently (*e.g.,* simultaneously), enhancing initial charge/discharge efficiency.

After mixing the nickel-manganese-based composite hydroxide and the lithium raw material, the heat treatment of the mixture may be referred to as a primary heat treatment (*e.g.*, the first heat treatment), while the heat treatment of the coated product may be referred to as a secondary heat treatment (*e.g.,* second heat treatment). The second heat treatment may be understood to be a process of forming the coating layer and, for example, performed under an oxygen atmosphere within a temperature range of about 700 °C to about 850 °C, about 750 °C to about 840 °C, or about 800 °C to about 830 °C for about 2 hours to about 20 hours, or for about 3 hours to about 10 hours. If the second heat treatment temperature is set within the aforementioned ranges, aluminium may be less diffused into the secondary particle but may remain mainly on the secondary particle surface to be coated as a shell with both (*e.g.,* simultaneously) a very thin and substantially uniform thickness, and zirconium may also be evenly (substantially uniformly) and thinly coated on the secondary particle surface.

In one or more embodiments, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the aforementioned positive electrode active materials. Additionally, the positive electrode active material layer may optionally further include a binder, a conductive material, and/or a (e.g., any suitable) combination thereof.

According to one or more embodiments, a loading level of the positive electrode active material layer may be about 10 mg/cm² to about 40 mg/cm², for example, about 10 mg/cm² to about 30 mg/cm², or about 10 mg/cm² to about 20 mg/cm². Additionally, a density of the positive electrode active material layer in the final compressed positive electrode may be about 3.0 g/cc to about 3.7 g/cc, for example, about 3.1 g/cc to about 3.7 g.cc, about 3.3 g/cc to about 3.6 g/cc, or about 3.4 g/cc to about 3.58 g/cc. When applying the positive electrode active material according to one or more embodiments, it is beneficial to implement such a loading level and positive electrode density, and a positive electrode that satisfies the loading level and positive electrode density in the above ranges may be suitable for implementing a high-capacity, high-energy-density rechargeable lithium battery.

### Binder

The binder improves binding properties of positive electrode active material particles with one another and with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the present disclosure is not limited thereto.

### Conductive Material

The conductive material is included to provide electrode conductivity (*e.g.,* it is an electron conductor) and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (*e.g.,* any suitable) mixture thereof.

The content (*e.g.,* amount) of each of the binder and the conductive material may be about 0.5 wt% to about 5 wt% based on 100 wt% of the positive electrode active material layer.

The positive electrode current collector may include aluminium (Al), but the present disclosure is not limited thereto.

### Rechargeable Lithium Battery

One or more embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

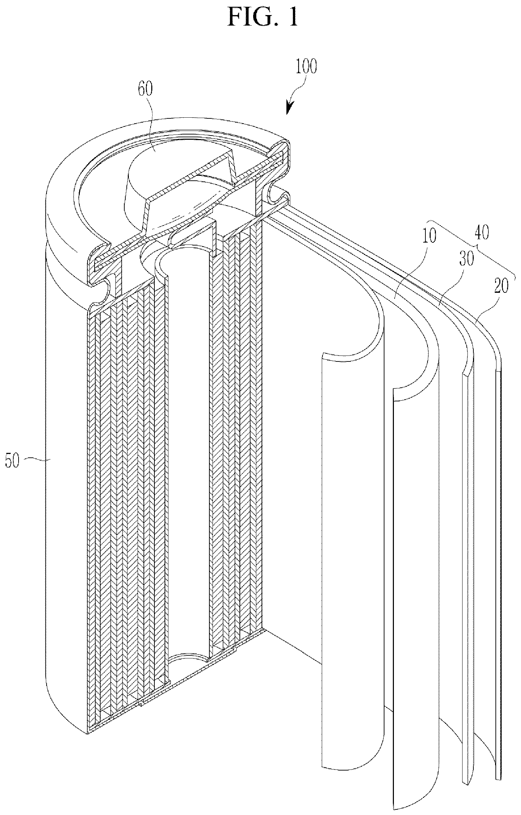

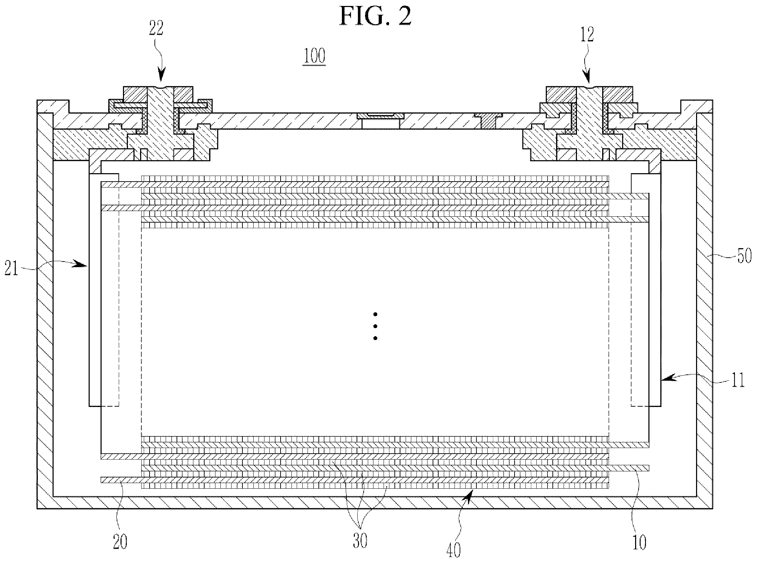

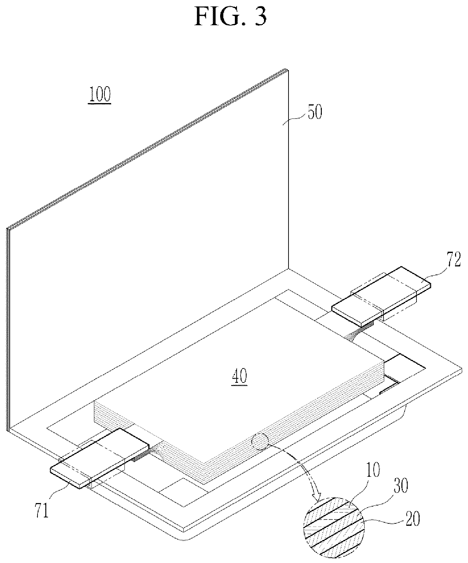

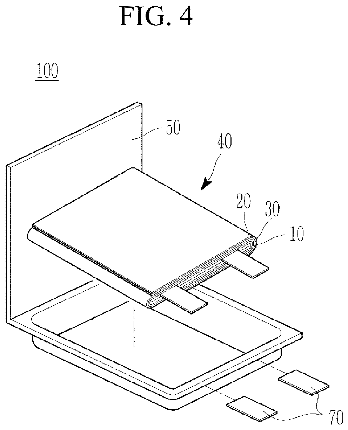

The rechargeable lithium battery may be classified into cylindrical, prismatic, pouch, coin, and/or the like, depending on the shape. FIGS. 1 to 4 are schematic diagrams each showing a rechargeable lithium battery according to one or more embodiments of the present disclosure, where FIG. 1 is a cylindrical battery, FIG. 2 is a prismatic battery, and FIGS. 3 and 4 are each a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50, as shown, for example, in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 may include electrode tabs 70, that is, a positive electrode tab 71 and a negative electrode tab 72 serving as an electrical path for conducting the current formed in the electrode assembly 40 to the outside.

The rechargeable lithium battery according to one or more embodiments may be rechargeable at high voltages or may be suitable for being driven at high voltages. For example, the charging voltage of a rechargeable lithium battery may be greater than or equal to about 4.45 V, about 4.45 V to about 4.7 V, about 4.45 V to about 4.6 V, or about 4.45 V to about 4.55 V, and/or the like. By applying the positive electrode active material according to one or more embodiments, the rechargeable lithium battery can reduce (*e.g.*, significantly reduce) the amount of gas generated even when charged at high voltages, and can achieve high capacity and long life-cycle characteristics.

### Negative Electrode

The negative electrode may include a current collector and a negative electrode active material layer on the current collector, and the negative electrode active material layer may further include a negative electrode active material, a binder, a conductive material, and/or a (*e.g.,* any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example crystalline carbon, amorphous carbon, and/or a (*e.g.*, any suitable) combination thereof as a carbon-based negative electrode active material. The crystalline carbon may be irregular, or sheet, flake, spherical, and/or fiber shaped (*e.g.,* in a form of sheets, flakes, spheres, and/or fibers of) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (*e.g.,* any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (*e.g.*, any suitable) combination thereof), and/or a (*e.g.,* any suitable) combination thereof. The Sn-based negative electrode active material may be Sn, SnOₓ (0 < x ≤ 2, *e.g.,* SnO₂), a Sn alloy, and/or a (*e.g.,* any suitable) combination thereof.

The silicon-carbon composite may be a composite of silicon and amorphous carbon. An average particle diameter (D50) of the silicon-carbon composite particles may be, for example, about 0.5 µm to about 20 µm. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (*e.g.*, any suitable) combination thereof. The amorphous carbon may include soft carbon or hard carbon, a mesophase pitch carbonized product, and calcined coke.

When the silicon-carbon composite includes silicon and amorphous carbon, a content (*e.g.*, amount) of silicon may be about 10 wt% to about 50 wt% and a content (*e.g.,* amount) of amorphous carbon may be about 50 wt% to about 90 wt% based on 100 wt% of the silicon-carbon composite. In one or more embodiments, if (*e.g.,* when) the composite includes silicon, amorphous carbon, and crystalline carbon, a content (*e.g.,* amount) of silicon may be about 10 wt% to about 50 wt%, a content (*e.g.*, amount) of crystalline carbon may be about 10 wt% to about 70 wt%, and a content (*e.g.,* amount) of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D50) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ

(0<x≤2). At this time, the atomic content (*e.g.*, amount) ratio of Si:O, which indicates a degree of oxidation, may be about 99:1 to about 33:67. As used herein, if (*e.g*., when) a definition is not otherwise provided, an average particle diameter (D50) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere (*e.g*., effectively adhere) the negative electrode active material particles to each other and also to adhere the negative electrode active material to the current collector. The binder may be a non-aqueous binder, an aqueous binder, a dry binder, and/or a (*e.g.,* any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide (PAI), polyimide, and/or a (*e.g.*, any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and/or a (*e.g.,* any suitable) combination thereof.

When an aqueous binder is used as the negative electrode binder, a cellulose-based compound capable of imparting viscosity may be further included. As the cellulose-based compound, one or more of carboxymethyl cellulose, hydroxypropyl methyl cellulose, methyl cellulose, or alkali metal salts thereof may be mixed and used. The alkali metal may be Na, K, or Li.

The dry binder may be a polymer material capable of becoming fiber (*e.g.,* capable of being in a fibrous form), and may be, for example, polytetrafluoroethylene, polyvinylidene fluoride, a polyvinylidene fluoride-hexafluoropropylene copolymer, polyethylene oxide, and/or a (*e.g.,* any suitable) combination thereof.

### Conductive Material

The conductive material is included to provide electrode conductivity (*e.g.,* is an electron conductor) and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (*e.g.,* any suitable) mixture thereof.

A content (*e.g.,* amount) of the negative electrode active material may be about 95 wt% to about 99.5 wt% based on 100 wt% of the negative electrode active material layer, and a content (*e.g.,* amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (*e.g.,* any suitable) combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyl tetrahydrofuran, 2,5-dimethyl tetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds), and if (*e.g.,* when) two or more types (kinds) are used in a mixture, a mixing ratio can be appropriately or suitably adjusted according to the desired or suitable battery performance, which is generally utilized and/or generally available to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinyl ethylene carbonate, vinylene carbonate, or an ethylene carbonate-based compound to improve the battery life-cycle.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables the basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above ranges, the electrolyte solution has appropriate or suitable ionic conductivity and viscosity, and thus excellent or suitable performance can be achieved and lithium ions can move effectively.

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (*e.g.,* any suitable) combination thereof on a surface (*e.g.,* one or both surfaces (*e.g.,* opposite surfaces)) of the porous substrate.

The porous substrate may be a polymer film formed of any one polymer selected from among polyolefin (such as polyethylene and polypropylene), polyester (such as polyethylene terephthalate and polybutylene terephthalate), polyacetal, polyamide, polyimide, polycarbonate, polyarylether ketone, polyether ketone, polyetherimide, polyamide-imide (PAI), polybenzimidazole, polyether sulfone, polyphenylene oxide, a cyclic olefin copolymer, polyphenylene sulfide, polyethylene naphthalate, a glass fiber, polytetrafluoroethylene (*e.g.,* TEFLON), and/or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (*e.g.,* any suitable) combination thereof, but the present disclosure is not limited thereto. An average particle diameter (D50) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples of embodiments of the present disclosure and Comparative Examples are described in more detail below. However, the following Examples are only specific embodiments of the present disclosure, and the present disclosure is not limited thereto.

### Example 1

### 1. Preparation of Positive Electrode Active Material

Ni_{0.75}Mn_{0.23}Al_{0.02}(OH)₂ and LiOH were mixed in a molar ratio of 1:1.05 and then primarily heat-treated at 845 °C under an oxygen atmosphere for 8 hours to prepare a lithium nickel-manganese-based composite oxide in a form of secondary particles having a composition of Li_{1.05}Ni_{0.75}Mn_{0.23}Al_{0.02}O₂ and an average particle diameter (D50) of about 14 µm.

A coating solution was prepared by adding aluminium sulfate to a distilled water solvent and stirring at about 350 rpm for about 5 minutes. As the salts were completely dissolved, the coating solution was checked to be colorless and transparent. 500 g of the prepared lithium nickel-manganese-based composite oxide was added to the continuously stirred coating solution for 1.5 minutes and stirred for about 25 minutes. Herein, an aluminium content (e.g., amount) of aluminium sulfate was designed to be 1.0 mol% based on 100 mol% of the total metal content excluding lithium in the positive electrode active material. The pH of the supernatant after completion of stirring was confirmed to be 5.5. An aspirator and a filter press were used to remove the solvent from the mixed solution, and a coated product was obtained by vacuum drying at 190 °C.

The coated product was dry-mixed with cobalt hydroxide (Co(OH)₂) and LiOH and then secondarily heat-treated at 825 °C for 8 hours under an oxygen atmosphere, preparing a positive electrode active material. Herein, a cobalt content (e.g., amount) of the cobalt hydroxide was designed to be 2.0 mol% based on 100 mol% of the total metal content excluding lithium in the positive electrode active material.

In summary, Ni_{0.75}Mn_{0.23}Al_{0.02}(OH)₂ and LiOH were mixed in a 1:1.05 molar ratio and heat-treated at 845 °C under an oxygen atmosphere for 8 hours to create a lithium nickel-manganese-based composite oxide with an average particle diameter of about 14 µm. A coating solution was prepared by dissolving aluminium sulfate in distilled water, stirring at 350 rpm for 5 minutes until colorless and transparent. The composite oxide was added to this solution and stirred for 25 minutes, resulting in a coating with 1.0 mol% aluminium (with respect to the total metal content in the positive electrode active material, excluding lithium, i.e., aluminium makes up 1.0 mol% of the total amount of metals (such as nickel, manganese, and aluminium) present in the lithium nickel-manganese-based composite oxide, not including lithium). The coated product was vacuum dried at 190°C, then mixed with cobalt hydroxide and LiOH, and heat-treated at 825°C for 8 hours to produce a positive electrode active material with 2.0 mol% cobalt (with respect to the total metal content in the positive electrode active material, excluding lithium, i.e., cobalt makes up 2.0 mol% of the total amount of metals (such as nickel, manganese, and aluminium) present in the composite oxide, not including lithium).

### 2. Manufacturing of Half-cell

98.5 wt% of the positive electrode active material, 1.0 wt% of a polyvinylidene fluoride binder, and 0.5 wt% of a carbon nanotube conductive material were mixed to prepare positive electrode active material layer slurry, and the slurry was coated on an aluminium foil current collector, and then dried and compressed to manufacture a positive electrode. Herein, a positive electrode active material layer formed above had a loading level of 10 mg/cm².

The positive electrode, a lithium metal counter electrode, and a polytetrafluoroethylene separator interposed therebetween were inserted into a case, and an electrolyte solution prepared by dissolving 1M LiPF₆ in a mixed solvent of ethylene carbonate and dimethyl carbonate in a volume ratio of 3:7 was injected thereinto to manufacture a half-cell.

### Example 2

A positive electrode active material with pellet density of 3.56 g/cc according to Example 2 was prepared by using the positive electrode active material of Example 1 as a first positive electrode active material, preparing a second positive electrode active material in the following method, and then mixing the first positive electrode active material and the second positive electrode active material in a weight ratio of 7:3. Except for this, a half-cell was manufactured in substantially the same manner as in Example 1.

### Preparation of Second Positive Electrode Active Material

Ni_{0.75}Mn_{0.25}(OH)₂, LiOH, and Al₂O₃ were mixed in a mole ratio of 1:1:0.05 and then heat-treated at 900 °C for 8 hours under an oxygen atmosphere to manufacture a lithium nickel-manganese-based composite oxide having a composition of Li_{1.05}Ni_{0.75}Mn_{0.23}Al_{0.02}O₂ in the form of single (e.g., monolithic) particles with an average particle diameter (D50) of about 3 µm.

The lithium nickel-manganese-based composite oxide, Al₂O₃, and Y₂O₃ were dry-mixed and then heat-treated at 825 °C for 8 hours under an oxygen atmosphere to prepare a second positive electrode active material. Herein, the mixing was performed to form a coating layer having 0.4 mol% of aluminium and 0.05 mol% of yttrium based on 100 wt% of the total metal content excluding lithium in the final second positive electrode active material.

In summary of Example 2, a positive electrode active material with a pellet density of 3.56 g/cc was prepared by mixing the positive electrode active material from Example 1, used as the first positive electrode active material with a newly prepared second positive electrode active material in a weight ratio of 7:3. The second positive electrode active material was created by mixing Ni_{0.75}Mn_{0.25}(OH)₂, LiOH, and Al₂O₃ in a 1:1:0.05 molar ratio, heat-treating at 900 °C for 8 hours to form single particles with an average diameter of about 3 µm. This composite oxide was then dry-mixed with Al₂O₃ and Y₂O₃, and heat-treated at 825 °C to achieve a final composition with 0.4 mol% aluminium and 0.05 mol% yttrium, excluding lithium. The half-cell was manufactured similarly to Example 1.

### Comparative Example 1

A half-cell was manufactured in substantially the same manner as in Example 1 except that the second positive electrode active material of Example 2 alone was used as the positive electrode active material.

### Comparative Example 2

After manufacturing a coated product, which was wet-coated with aluminium as in preparing the positive electrode active material of Example 1, the aluminium-coated product was heat-treated at 825 °C for 8 hours under an oxygen atmosphere without the cobalt dry-coating using cobalt hydroxide, preparing a third positive electrode active material. The third positive electrode active material and the second positive electrode active material of Example 2 were mixed in a weight ratio of 7:3 to prepare a positive electrode active material of Comparative Example 2. Except for this, a half-cell was manufactured in substantially the same manner as in Example 1.

### Comparative Example 3

A positive electrode active material and a half-cell were manufactured in substantially the same manner as in Example 1 except that a coated product was obtained by mixing cobalt hydroxide (Co(OH)₂) together, when mixing Ni_{0.75}Mn_{0.23}Al_{0.02}(OH)₂ and LiOH in Example 1, and then primarily heat-treating the mixture at 845 °C for 8 hours, forming the aluminium oxide coating, and then performing a second heat treatment at 825 °C for 8 hours without the cobalt dry-coating. Herein, based on 100 mol% of the total metal content excluding lithium, a cobalt content (*e.g.*, amount) of the cobalt hydroxide was designed to be 2.0 mol%, and an aluminium content (e.g., amount) of the aluminium oxide was designed to be 1.0 mol%.

### Evaluation Example 1: Evaluation of dQ/dV

The half-cells according to Examples 1 and 2 and Comparative Examples 1 to 3 were charged to an upper limit voltage of 4.45 V at a constant current of 0.2 C and to 0.05 C at the constant voltage and then discharged to a cut-off voltage of 3.0 V at 0.2 C at 25 °C in a formation process (first charge and discharge). Subsequently, standard charging and discharging (second charge and discharge) was performed under the same condition as the formation process. Herein, 1 C = 200 mAh/g, and a current applied thereto was in a range of 0.5 mA to 0.7 mA.

FIG. 5 shows a dQ/dV graph according to a voltage of the half-cell of Example 1 during the formation (*i.e.*, the first cycle) and the standard charging and discharging (*i.e.*, the second cycle). Referring to FIG. 5, in the graph of the standard charging and discharging after the formation, a point where a tangent line drawn at the first inflection point meets the line where dQ/dV = 0 was located within a voltage range 3.68 V to 3.70 V. In addition, the graph of the formation, a point where a tangent line drawn at the first inflection point meets the line where dQ/dV = 0 was located within a voltage range of 3.68 V to 3.70 V but further to the right than the corresponding voltage during the standard charging and discharging. In other words, the standard charging and discharging graph after the formation, compared with the formation graph, was confirmed to be shifted to the left. Referring to FIG. 5, the dQ/dV graph during the formation exhibited two main peaks, but the dQ/dV graph after the formation exhibited one main peak.

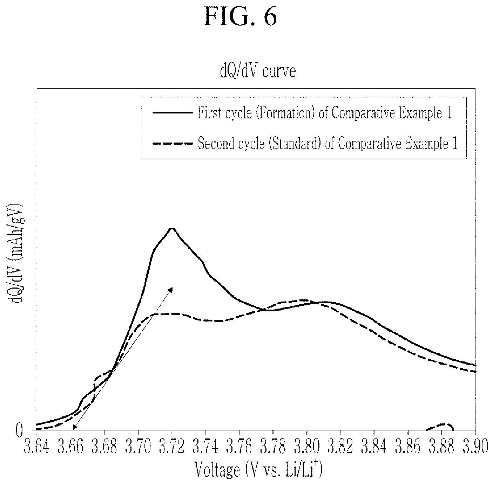

FIG. 6 shows dQ/dV graphs for the half-cell of Comparative Example 1 during the formation and the standard charging and discharging after formation. Referring to FIG. 6, in Comparative Example 1, a point where a tangent line drawn at the first inflection point meets the line where dQ/dV = 0 was not located within a voltage range of 3.68 V to 3.70 V during both the formation and during the standard charging and discharging, and both the formation graph and the standard charging and discharging graph exhibited two main peaks, which was different from those of Example 1.

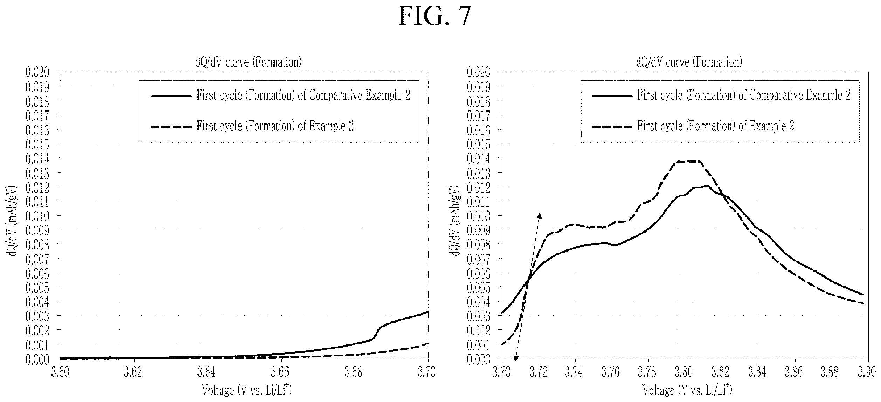

FIG. 7 shows dQ/dV graphs of Example 2 and Comparative Example 2 during formation.

Referring to the right graph of FIG. 7, in Example 2 during the formation, a point where a tangent line drawn at the first inflection point meets the line where dQ/dV = 0 was located within a voltage range of 3.70 V to 3.72 V. In addition, referring to the left graph of FIG. 7, a slope of the graph was 0.02 or less within a range of 3.6 V to 3.7 V.

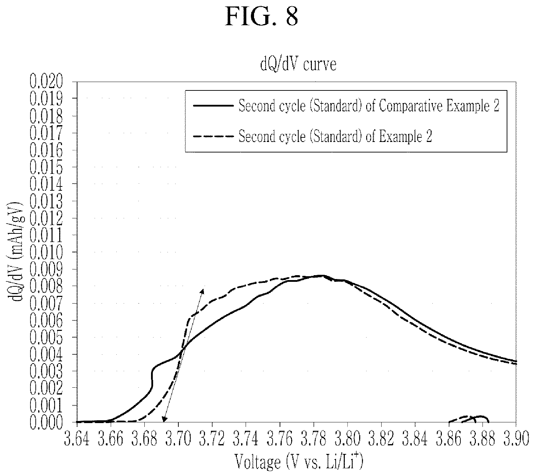

FIG. 8 shows dQ/dV graphs during standard charging and discharging after the formation for the half-cells of Example 2 and Comparative Example 2. Referring to FIG. 8, in Example 2, a point where a tangent line drawn at the first inflection point meets the line where dQ/dV = 0 was located within a voltage range of 3.68 V to 3.70 V, which was different from that of Comparative Example 2.

In contrast, as a result of analyzing dQ/dV graphs of the half-cell of Comparative Example 3, in the graph during the standard charging and discharging, a point where a tangent line drawn at the first inflection point meets the line where dQ/dV = 0 was out of the range of 3.68 V to 3.70 V. This was attributed to (understood to be caused by) an increase in resistance due to a relatively low cobalt content (e.g., amount) on the positive electrode active material surface.

### Evaluation Example 2: Evaluation of initial charge and discharge capacity and high-temperature life-cycle characteristics of the battery cells

As for the half-cells according to Examples 1 and 2 and Comparative Examples 1 to 3, discharge capacity at the standard charging and discharging in Evaluation Example 1 is shown as initial discharge capacity in Table 1. Following the standard charging and discharging, the cells were repeatedly charged and discharged 50 times or more at 1.0 C within a voltage range of 3.0 V to 4.45 V at 45 °C to calculate a ratio of 50^{th} cycle discharge capacity to the initial discharge capacity, which is shown as the high-temperature life-cycle in Table 1.

**Table 1**

| | Initial discharge capacity (mAh/g) | High-temperature life-cycle (%, 45 °C, 50 cyc) |
|---|---|---|
| Example 1 | 197.1 | 96.5 |
| Example 2 | 195.5 | 97.5 |
| Comparative Example 1 | 196.5 | 91.9 |
| Comparative Example 2 | 195.1 | 96.8 |
| Comparative Example 3 | 193.5 | 94.2 |

Referring to Table 1, Examples 1 and 2 exhibited high initial discharge capacity and realized excellent or suitable high-temperature life-cycle characteristics. In addition, Example 1 exhibited excellent or suitable initial discharge capacity and high-temperature life-cycle characteristics, compared with Comparative Examples 1 and 3, and Example 2 was confirmed to exhibit much higher initial discharge capacity and high-temperature life-cycle characteristics than Comparative Example 2.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Further, the use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

The portable device, vehicle, and/or the battery, *e.g.*, a battery controller, a device of manufacturing the active material or battery, and/or any other relevant devices or components according to embodiments of the present disclosure described herein may be implemented utilizing any suitable hardware, firmware (*e.g.*, an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

### < Reference Numerals >

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode comprising:
a positive electrode current collector, and
a positive electrode active material layer on the positive electrode current collector,
wherein the positive electrode active material layer comprises a positive electrode active material comprising
core particles comprising a layered lithium nickel-manganese-based composite oxide comprising 0.1 mol% to 2 mol% of cobalt based on 100 mol% of total metal content in the layered lithium nickel-manganese-based composite oxide, excluding lithium; and
an aluminium coating layer on a surface of the core particles,
wherein, in a dQ/dV graph of voltage during standard charging and discharging, evaluated under conditions of 1C=200 mAh/g, a constant current of 0.2 C, and applied current of 0.5 mA to 0.7 mA, a point where a tangent line drawn at a first inflection point meets the line where dQ/dV = 0 is in a voltage range of 3.68 V to 3.70 V.

2. The positive electrode as claimed in claim 1, wherein the dQ/dV graph of voltage during standard charging and discharging has a slope of less than or equal to 0.02 in a range of 3.60 V to 3.68 V.

3. The positive electrode as claimed in claim 1 or claim 2, wherein in the dQ/dV graph of voltage during formation, evaluated under conditions of 1 C = 200 mAh/g, a constant current of 0.2 C, and an applied current of 0.5 mA to 0.7 mA, a point where a tangent line drawn at a first inflection point meets the line where dQ/dV = 0 is in a voltage range of 3.68 V to 3.72 V.

4. The positive electrode as claimed in any one of claims 1 to 3, wherein in the dQ/dV graph of voltage during standard charging and discharging, the point where the tangent line drawn at the first inflection point meets the line where dQ/dV = 0 is at a lower voltage value than, in a dQ/dV graph of voltage during formation, evaluated under conditions of 1 C = 200 mAh/g, a constant current of 0.2 C, and an applied current of 0.5 mA to 0.7 mA, a point where a tangent line drawn at a first inflection point meets the line where dQ/dV = 0.

5. The positive electrode as claimed in claim 4, wherein
the dQ/dV graph of voltage during the formation shows two main peaks, and
the dQ/dV graph of voltage during standard charging and dischargingshows one main peak.

6. The positive electrode as claimed in any one of claims 1 to 5, wherein the positive electrode active material is in a form of secondary particles each comprising a plurality of primary particles that are agglomerated together, and the secondary particles have an average particle diameter (D50) of 10 µm to 18 µm.

7. The positive electrode as claimed in any one of claims 1 to 6, wherein the layered lithium nickel-manganese-based composite oxide comprises greater than or equal to 60 mol% of nickel and greater than or equal to 15 mol% of manganese based on 100 mol% of the total metal content in the layered lithium nickel-manganese-based composite oxide, excluding lithium.

8. The positive electrode as claimed in any one of claims 1 to 7, wherein:
(i) the layered lithium nickel-manganese-based composite oxide further comprises aluminium, and an amount of aluminium is 1 mol% to 3 mol% based on 100 mol% of the total metal content in the layered lithium nickel-manganese-based composite oxide, excluding lithium; and/or
(ii) the positive electrode active material is in a form of secondary particles each comprising a plurality of primary particles agglomerated together, and
the positive electrode active material comprises a grain boundary coating portion on the surface of primary particles within each of the secondary particles, the grain boundary coating portion comprising cobalt.

9. The positive electrode as claimed in any one of claims 1 to 8, wherein the layered lithium nickel-manganese-based composite oxide is represented by Chemical Formula 1:
Chemical Formula 1 Liₐ₁Niₓ₁Mn_{y1}CO_{z1}Alᵥ₁M¹_{w1}O_{2-b1}X_{b1}
wherein, in Chemical Formula 1, 0.9≤a1≤1.8, 0.6≤x1≤0.8, 0.15≤y1≤0.399, 0.001≤z1≤0.02, 0≤v1≤0.03, 0≤w1≤0.3, 0.9≤x1+y1+z1+v1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, Y, Zn, and Zr, and X is one or more elements selected from among F, P, and S.

10. The positive electrode as claimed in any one of claims 1 to 9, wherein:
(i) the aluminium coating layer is in a form of a shell that continuously surrounds the surface of the core particles, and
a thickness of the aluminum coating layer is 5 nm to 500 nm; and/or
(ii) an amount of aluminium of the aluminium coating layer is 0.1 mol% to 3 mol% based on 100 mol% of the total metal content in the positive active material excluding lithium.

11. The positive electrode as claimed in any one of claims 1 to 10, wherein:
the positive electrode active material comprising the core particles and the aluminum coating layer on the surface of the core particles is a first positive electrode active material, the core particles each comprising a plurality of primary particles agglomerated together; and
a second positive electrode active material comprising a layered lithium nickel-manganese-based composite oxide in the form of single particles, and having an average particle diameter (D50) smaller than an average particle diameter (D50) of the first positive electrode active material, is further comprised.

12. The positive electrode as claimed in claim 11, wherein:
(i) the first positive electrode active material is in an amount of 60 wt% to 95 wt% and the second positive electrode active material is in an amount of 5 wt% to 40 wt%, based on a total of 100 wt% of the first positive electrode active material and the second positive electrode active material; and/or
(ii) the average particle diameter (D50) of the first positive electrode active material is 10 µm to 18 µm, and
the average particle diameter (D50) of the second positive electrode active material is 1 µm to 8 µm; and/or
(iii) the layered lithium nickel-manganese-based composite oxide of the second positive electrode active material comprises greater than or equal to 60 mol% of nickel, greater than or equal to 15 mol% of manganese, 0 mol% to 3 mol% of aluminium, and 0 mol% to less than 0.1 mol% of cobalt based on 100 mol% of the total metal content in the layered lithium nickel-manganese-based composite oxide of the second positive electrode active material, excluding lithium.

13. The positive electrode as claimed in claim 11 or claim 12, wherein:
(i) the layered lithium nickel-manganese-based composite oxide of the second positive electrode active material is represented by Chemical Formula 2:
Chemical Formula 2 Liₐ₂Niₓ₂Mn_{y2}Al_{z2}M²_{w2}O_{2-b2}X_{b2}
wherein, in Chemical Formula 2, 0.9≤a2≤1.8, 0.6≤x2≤0.8, 0.15≤y2≤0.4, 0≤z2≤ 0.03, 0≤w2≤0.3, 0.9≤x2+y2+z2+w2≤1.1, and 0≤b2≤0.1, M² is one or more elements selected from among B, Ba, Ca, Ce, Cr, Cu, Fe, Mg, Mo, Nb, Si, Sn, Sr, Ti, V, W, Y, Zn, and Zr, and X is one or more elements selected from among F, P, and S; and/or
(ii) the second positive electrode active material further comprises a coating layer on the surface of the single particles, the coating layer comprising Al, B, Mg, Ti, V, W, Y, Zr, or a combination thereof.

14. The positive electrode as claimed in any one of claims 1 to 13,
optionally wherein the positive electrode active material layer has a loading level of 10 mg/cm² to 40 mg/cm², and
the positive electrode active material layer has a density of 3.0 g/cc to 3.7 g/cc.

15. A rechargeable lithium battery comprising
the positive electrode as claimed in claim 1,
a negative electrode, and
an electrolyte,
optionally wherein an upper charging limit voltage of the rechargeable lithium battery is greater than or equal to 4.45 V.
